# EUROPEAN PATENT SPECIFICATION

(11) **EP 4 422 410 B1**
(45) Date of publication and mention of the grant of the patent: **25.02.2026**
(21) Application number: 22790334.1
(22) Date of filing: 26.10.2022
(51) Int. Cl.: A23G 1/00, A23G 1/50, A23G 1/54, A23G 1/56

(54) **FLOATABLE FOOD PRODUCT FOR MELTING AND/OR DISSOLVING IN A LIQUID**
SCHWIMMFÄHIGES LEBENSMITTELPRODUKT ZUM SCHMELZEN UND/ODER AUFLÖSEN IN EINER FLÜSSIGKEIT
PRODUIT ALIMENTAIRE FLOTTANT POUR LA FUSION ET/OU LA DISSOLUTION DANS UN LIQUIDE

(30) Priority: 26.10.2021 BE 202105835
(43) Date of publication of application: 04.09.2024
(73) Proprietor: Decock, Frank, 8000 Brugge (BE)
(72) Inventor: Decock, Frank, 8000 Brugge (BE)
(74) Representative: Arnold & Siedsma
(86) International application number: PCT/EP2022/079929
(87) International publication number: WO 2023/073015

(56) References cited:
- EP-A1- 0 324 072
- EP-B1- 1 018 302
- WO-A1-2007/072123
- WO-A1-2019/102426
- DE-A1- 102019 128 770
- FR-A1- 3 075 002
- GB-A- 2 342 312
- GB-A- 2 555 138
- GB-A- 416 970
- JP-A- S63 301 752
- US-A1- 2012 321 750
- US-A1- 2021 145 019

## Description

### Technical field

The invention relates to the preparation of a drink by melting or dissolving a food product floating on a (possibly hot or cold) liquid, such as for instance a hot drink. In particular, the invention relates to an edible chocolate mold floating on a liquid, hot or cold, such as for example a chocolate duckling on warm milk, which over time (initially at the bottom of the mold where the chocolate comes into contact with the warm milk) dissolves and/or melts to create hot chocolate. The use of a three-dimensional figure such as a chocolate duckling, for example, as well as the time event during which the dissolving and/or melting process can take place slowly but effectively, provides a certain amusement and entertainment linked to this food product or drink, in particular for instance for children.

### Background of the invention

There are different kinds of food products for the preparation of a liquid food preparation such as, for example, a hot drink with chocolate flavor.

WO2019102426 A1 discloses a confectionary product comprising a solid edible shell having a closed cavity within, the shell comprising chocolate and a functional component contained within the cavity, wherein the functional component comprises one or more active ingredients. There is also disclosed a method of preparing a chocolate-flavored fluid food preparation, preferably a drink, comprising the step of putting into contact the confectionary product and an edible fluid having a temperature suitable to melt the confectionary product, thus obtaining a mixture of the fluid and the confectionary product.

DE102019128770 A1 describes a beverage preparation element for preparing a hot beverage, comprising a casing made of chocolate or a cocoa-containing compound coating, and a filling arranged in the casing, which contains more than 30 weight percent of sweetened condensed milk and a percentage of instant coffee. The invention additionally relates to a method for preparing a hot beverage using such a beverage preparation element such that the user can produce a flavorful hot beverage with simple means.

FR3075002 A1 relates to a dosed capsule for hot chocolate and its preparation process. The dosed capsule comprises a solid chocolate spherical shell having a certain diameter and thickness, and an interior space filled with air and comprising a chocolate powder (structure).

US2021145019 relates to a food product having first and second shells containing multiple ingredients. The first and second shells are attached to each other by an edible bonding agent. The shells and the edible bonding are configured to be dissolved or melted into a heated liquid herewith releasing the multiple ingredients and forming a heated beverage. One of the multiple ingredients may be configured to float on a top surface of the heated beverage (e.g. floating marshmallows) as opposed to the food product itself.

However, none of these inventions mention anything about (the ability of) floating the food product or beverage preparation element on the edible and/or hot liquid used to melt or dissolve the food product or beverage preparation element there within.

### Aim of the invention

The aim of the invention is to provide a food product which can float on an edible liquid, hot or cold, and wherein the food product will dissolve and/or melt in the edible liquid over time, thus making a drink with an entertainment or amusement effect. As an example, especially for children, reference can be made to a floating chocolate duckling on warm milk that will melt and dissolve after a while, in order to obtain chocolate milk in a fun way.

### Summary of the invention

The invention is defined by the claims. According to a first aspect, the invention provides a food product for preparing a drink by melting and/or dissolving it in a liquid (13), the food product comprises an edible hollow shell (1) comprising at least two connected parts (2, 3), and an edible filling (4), wherein - the food product is configured to float on said liquid before it starts melting and/or dissolving therein, in that; - the edible hollow shell (1) can be divided along a surface into two non-identical halves, comprising a first half (9) and a second half (10), said surface passing through the center (C) of the edible hollow shell (1); and - the edible filling (4), having a solid shape, is located in the first half (9) of the edible hollow shell (1), whereas the edible hollow shell (1) further comprises an air chamber (5) wherein the first half (9), where the edible filling (4) is located, is a lower half of the edible hollow shell (1) with respect to a horizontal axis (B), and the lower half is in the shape of a dome or sphere. The invention provides a floatable food product for preparing a drink or beverage by melting and/or dissolving it in a liquid, hot or cold, and preferably a warm liquid, wherein the food product comprises a hollow shell with a volume. The hollow shell, for example based on chocolate, comprises at least two connected parts that form a three-dimensional figure and define the volume of the hollow shell, as well as a solid filling (placed) within the volume of the hollow shell. The filling may also have been made from chocolate, albeit in a concentrated form or, for example, as a ganache. The volume of the hollow shell can be subdivided or split along a (horizontal, i.e. parallel to the ground floor) surface into two (non-identical) halves, being a first and a second half, wherein the surface is passing through the center of the hollow shell. This surface comprises a centerline or axis which also passes through this center. The centerline divides the volume into two halves, but is not an axis of symmetry; it does pass through the center of the volume. The first and second half are therefore not necessarily the same size, identical or symmetrical, nor do they have to be each other's mirror image. They are referred to as halves because together they form the whole, being the complete hollow shell with a defined volume. The filling is located in one of the halves, being the first half of the volume, but it does not necessarily fill the entire first half. Possibly the filling occupies only a part or sub-part of the first half in volume, and for the rest the hollow shell, being the remaining part or sub-part of the first half plus the entire second half, is only filled with air. The second half is in any case only filled with air. In other words, in addition to the filling (present in the first half), the hollow shell also comprises an air chamber (in the second half and possibly also part of the first half). In other words, according to an embodiment, the first half also comprises air in addition to the filling, such that the air chamber comprises both a part of the first as well as the entire second half. However, it is also possible that the air chamber only occupies the second half, if the filling completely fills the first half, and consequently no more air can enter the first half. Still differently, we can say that the filling (possibly in combination with a portion of air) is on one side of the hollow shell with respect to the center of the hollow shell, and that on the other opposite side of the hollow shell, the volume of the shell contains only air or is only filled with air. According to an embodiment, the filling is adhered to one side of the hollow shell. The filling has a solid shape (e.g. spherical), which can be attached to one side by applying (to the filling and/or side) melted chocolate (or another nutrient in liquid state) and hence after solidification of the melted chocolate (or other nutrient in liquid state) the filling is affixed to the side.

The invention is based on the insight that if the solid filling is located on one side of the hollow shell with respect to the center of the hollow shell, this side becomes heavier. As we yet know, the food product also comprises a lot of air or a substantive air compartment. As a result, the food product is particularly designed or configured (with this weight or float inside and large amount of air enclosed) such that it is floatable on a liquid, or at least on certain types of liquid. Typically, when the floatable food product is placed (and floating) on (and partially in) a liquid, the heavier side will be more or more deeply in the liquid, or in other words, typically the half wherein the filling is located, will get into the liquid - possibly it will get below the top surface of the liquid - and hence, this half is brought into contact with the liquid. Since otherwise (besides the filling) the hollow shell only comprises air, the food product (even with a part lowered to below the upper surface of the liquid) remains floating on the liquid, however limited in time. The time of floating may depend, among other things, on the temperature of the liquid. The half wherein the filling is located and being in contact with the liquid (preferably a warm liquid) will start to dissolve and/or melt over time, causing this half (along with the filling that may or may not be attached to it) to come off and ends up in the liquid. The filling forms a counterweight to the air chamber on the opposite side or half of the hollow shell. Because the half comprising the filling is in contact with the liquid, it will come off faster compared to the opposite half. This half with the filling, which thus comes off more quickly, can sink more quickly into the liquid due to gravity. Whenever the half with the filling comes off, the filling automatically comes into contact with the liquid and the filling is quickly dissolved (and/or melted) in it. As yet mentioned, in terms of food, the hollow shell and/or the filling can be made from or based on chocolate, whereas the liquid can be for example hot milk, resulting into hot chocolate (as prepared drink or beverage) whenever the chocolate shell and/or filling is melted and/or dissolved therein.

According to an embodiment, the two connected parts are symmetrical, in particular mirroring (i.e. one is the mirror image of the other), with respect to or in view of their connecting surface. The symmetrical (or mirroring) shape ensures that the hollow shell dissolves and/or melts evenly in the (warm) liquid.

According to the invention as provided in the appended set of claims, the side where the filling is located, or the first half of the shell, is a lower half of the shell relative to a horizontal or lying axis. The horizontal or lying axis being parallel with the ground floor, but also with the upper surface of a liquid onto which the floatable food product can be placed to let it melt and/or dissolve therein. The horizontal or lying axis possibly passing through the center of the shell, or close thereto. Whenever the filling is located in the lower half of the shell (with respect to the horizontal axis, or in view of the liquid upper surface), it comes into direct contact with the (warm) liquid and both the side of the shell and the filling (possibly attached to it) will melt and/or dissolve more quickly. According to an embodiment, the air-only side, or the second half of the shell, is an upper half of the shell relative to the horizontal or lying axis (as defined above). The air chamber allows the food product to float (e.g. a chocolate duckling floating (temporarily) on hot milk), which makes the use of the food product for the consumer more interactive and gives it an amusement effect or entertainment character.

According to the invention as provided in the appended set of claims, the first or lower half of the shell relative to the horizontal axis (possibly passing through the center of the shell) has at least substantially the shape of a dome or (hemi)sphere. In this case, because all points at the (outer) surface of a sphere are equidistant from a center point, the first or lower half containing the filling will dissolve and/or melt more evenly in the (warm) liquid, which may reduce or shorten the time required to prepare the drink. Further, according to an embodiment, the diameter of the first or lower half of the shell does not exceed 40 mm. By limiting the size of the first or lower half wherein the filling is located, the food product can fit into any type of drinking cups, such as for instance a cup or a mug, which may broaden the field of application of the food product. According to an embodiment, the height of the second or upper half of the shell relative to the horizontal axis (possibly passing through the center of the shell) is at least substantially greater or bigger than or equal to the height of the first or upper half of the shell relative to the horizontal axis. This feature can help to keep the product (better) in balance when floating on a liquid.

According to an embodiment, the solid filling has at least substantially the shape of a sphere (or is spherical). Because all points at the sphere (outer) surface are equidistant from its center point, the spherical filling melts more evenly in the warm liquid, reducing the time to prepare the drink. According to an embodiment, the shell, when making contact with the warm liquid, melts within 20-40 seconds.

According to an embodiment, the filling is a concentrated chocolate. The chocolate can be selected according to color, taste or melting resistance, which makes the food product pleasant to the consumer from an organoleptic point of view. Whenever the chocolate is concentrated, the filling does not have to be large to achieve the right taste of the (flavored) drink. The small size of the filling may shorten the time of preparing the drink, although this is not necessarily the case.

According to an embodiment, the (chocolate) filling is a ganache. The ganache is a soft chocolate cream. The taste of the filling can complement or enhance the taste of the shell, which makes the food product pleasing to the consumer from an organoleptic point of view. The melting point of the ganache is lower than the melting point of the chocolate, so the filling will dissolve and/or melt faster in the (warm) liquid, possibly reducing the time to prepare the drink.

According to an embodiment, (warm or hot) chocolate milk is created using a hollow chocolate-based shell and a filling of concentrated chocolate or ganache, and melting and/or dissolving it in, for example, warm or hot milk. In addition to chocolate, the hollow shell may also be made from a different nutrient, and the filling may be something else edible and possibly concentrated. For example, we can also refer to a hollow shell based on a light biscuit or wafer dough in which a concentrated broth or bouillon or soup base is placed as the filling. The use of such a hollow shell with savory (instead of sweet) filling on, for example, a cup or mug with hot water, can then lead to the preparation of a soup.

According to an embodiment, the thickness of the walls of the shell, for instance chocolate walls when the shell is made on the basis of chocolate, is at least substantially uniform. The uniform thickness of the (chocolate) walls can help to keep the hollow shell in balance (when placed and floating on the liquid) and can allow the lower half of the hollow shell wherein the filling is located, to dissolve and/or melt (more) evenly in the (warm) liquid.

According to a second aspect, the invention provides a method for making a food product according to any one of claims 1 to 12 by means of a mold, the method comprising the steps: - preforming at least two parts (2, 3) by pouring a nutrient in liquid state into the mold; - preforming an edible filling (4); - cooling the obtained parts (2,3) and the obtained edible filling (4); - placing the edible filling (4) in one of the two parts (2, 3); - connecting the two parts (2, 3) by welding them together using said or another nutrient in liquid state. The invention provides
a method for making a food product in accordance with the first aspect of the invention, i.e. a food product for preparing a drink or beverage by melting and/or dissolving it in a (hot or cold) liquid wherein the food product, being floatable, comprises a hollow shell provided with a solid filling. According to this method, at least two parts are preformed by pouring e.g. melted chocolate or more generally a nutrient in liquid state into a mold, a filling is preformed, the resulting molded parts and the resulting filling are cooled, the filling is placed in one of the two parts, and the two parts are connected by welding them together with e.g. a chocolate in a liquid state or more generally back the liquid state nutrient from above, or another liquid state nutrient. Alternatively, in the case of a chocolate-based food product, for example, the edge or border of at least one of the two parts, by means of which the parts are connected together, can be heated until it becomes liquid and then fused with the other edge and so connect. According to an embodiment, the filling is attached or 'glued' e.g. by a melted substance (for example melted chocolate) to the inner surface of one of the two parts, such that it gets fixed thereto. The filling is for example fixed to the inner surface or side of the shell, at a location which is preferred to come closer into contact with the (melting and/or dissolving) liquid onto which the food product is to be placed and floated. The above-mentioned advantages and effects of the food product in accordance with the first aspect of the invention, apply analogously to the method in accordance with second aspect.

Certain and preferred embodiments of the invention are described in the appended independent and dependent claims. Features of the dependent claims may be combined with those of independent and other dependent claims as appropriate and not solely as expressly stated in the claims.

The above and other features, functions and advantages of the present invention will become apparent from the following detailed description, taken in conjunction with the accompanying drawings, which exemplify the principles of the invention. The reference numbers below refer to the attached drawings.

### Brief description of the drawings

With specific reference to the figures, it is emphasized that the details shown are by way of example only and for illustrative discussion of the various embodiments of the present invention. They are presented for the purpose of providing what is considered to be the most useful and straightforward description of the principles and conceptual aspects of the invention. In this regard, no attempt is made to show more structural details of the invention than is necessary for a fundamental understanding of the invention. The description taken in conjunction with the figures makes it clear to those skilled in the art how the various forms of the invention can be practiced.

The invention will now be described in more detail with reference to a few exemplary embodiments shown in the drawings.
Figure 1 shows a rear view of a food product in accordance with an embodiment of the invention.
Figure 2 shows in Figure 2 (a) and (b) respectively a cross-section of two (mirroring and connected) parts of a food product in side view in accordance with an embodiment of the invention.
Figure 3 shows a side view of a food product in accordance with an embodiment of the invention.
Figure 4 shows a perspective view of a food product in accordance with to an embodiment of the invention.
Figure 5 shows an application of a food product, in particular in combination with a liquid for melting or dissolving it, in accordance with to an embodiment of the invention.

In the drawings, the same reference numeral is assigned to the same or analogous element.

### Detailed description of the invention

The present invention will be described with reference to certain embodiments and certain drawings, but is not limited thereto. The drawings, as further described, are only schematic and non-limiting. In the drawings, some elements may not be drawn to scale for illustration purposes. The dimensions and relative dimensions do not correspond to the actual limitations in practice.

In addition, the terms first, second, further and similar are used in the specification and in the claims to distinguish between similar elements and not per se to describe a sequence, whether in time, space, order or otherwise. It is understood that the terms so used are interchangeable under appropriate circumstances and that the embodiments of this invention may be applied in another order than is described or illustrated herein.

The term "comprises" used in the claims should not be construed as being limited to, for example, the following means; other elements or steps are not excluded. This refers to the presence of the mentioned features, integers, steps or parts, but does not exclude the presence or addition of one or more other features, integers, steps, parts or groups. Thus, the scope of the expression 'a product comprising A and B' should not be limited to devices consisting only of parts A and B. This means that the relevant parts of the product are A and B and other parts such as C may be present in the present invention.

When reference is made in this specification to 'one embodiment' or 'an embodiment', this means that a particular function or structure, or a particular feature related to the embodiment, is incorporated in at least one embodiment of the present invention. When "in one embodiment" or "in an embodiment" is mentioned in different places in this specification, it does not necessarily refer to the same embodiment. Moreover, certain functions, structures or features may be combined in any suitable manner, as would be deemed appropriate or applicable in one or more embodiments by an ordinary skilled person in the art.

In addition, the description of exemplary embodiments and various features of the invention are sometimes grouped into one embodiment, illustration, or description to streamline the disclosure and explain one or more inventive aspects. However, it should not be inferred from this manner of disclosure that the claimed invention requires more features than are expressly stated in each claim. As can be seen from the following claims, the inventive aspects are found in less than all the features of one embodiment mentioned above. For this reason, the claims which follow the detailed description are expressly incorporated in the summary above (albeit under slightly different wording), each (written) claim being a separate embodiment of this invention.

While some of the embodiments described herein include some but no other features of other embodiments, combinations of features of different embodiments are within the scope of the invention and together constitute different embodiments that will be understood by those skilled in the art. For example, in the following claims, all of the claimed embodiments may be used in any combination.

Various specific details are set forth in the description provided herein. However, the embodiments of the invention are practiced without these specific details. In other instances, known methods, structures and techniques were not detailed in order to simplify this description.

The following terms are mentioned solely to illustrate the invention. The term "chocolate" here means a composition comprising cocoa and/or cocoa butter, which are commercially also referred to as dry cocoa solids and/or cocoa butter ingredients. The term is not necessarily limited by any legal definition. The term "ganache" describes a soft chocolate (butter) cream.

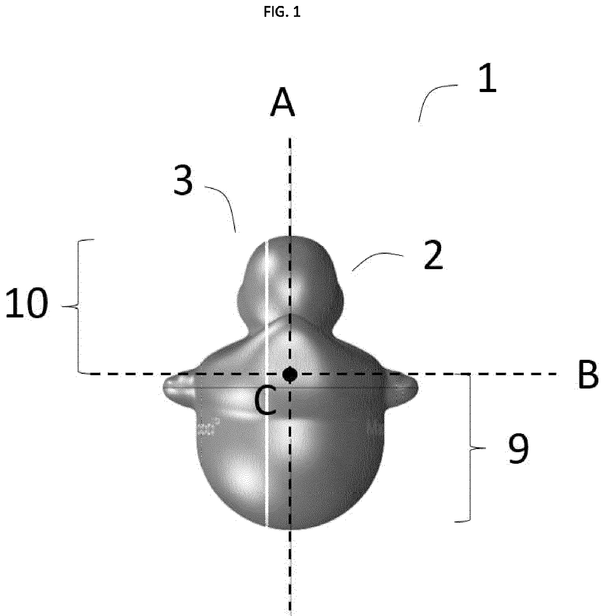

Figure 1 shows a food product in rear view for preparing a drink by dissolving and/or melting it in a, preferably warm, liquid according to a preferred embodiment of the invention. The floatable food product is shown here in the form of a duckling, comprising a hollow shell 1 based on chocolate. Seen from the rear view, the tail of the duckling and the back of the protruding head are especially visible. The chocolate of the hollow shell can have different flavors, for example the taste of dark, milk or white chocolate. The shell 1 comprises two connected parts 2, 3 and a filling 4 (not shown, provided inside the hollow shell). Part 2 and part 3 together form a three-dimensional figure, here for example a duck (with hemisphere or dome at the bottom). Preferably, the two parts 2, 3 are connected or joined together by welding or 'gluing' (i.e. fusing or melting, and curing or solidifying) them together with the chocolate in a fluid (e.g. molten) state. Preferably, the two connected parts 2, 3 are symmetrical, in particular mirroring. Preferably, the two parts 2, 3 are connected to each other along an upright or vertical axis A. The vertical or upright axis A being perpendicular to the ground floor. Alternatively, not shown, the two parts 2, 3 can be connected to each other along the horizontal axis B. The horizontal or lying axis B being parallel with the ground floor.

The horizontal axis B can also be referred to as centerline since it passes through the center C of the hollow shell 1, while a (horizontal) surface comprising or incorporating this centerline divides or splits the volume of the hollow shell 1 into two halves. These two halves are not necessarily identical or symmetrical. One half may itself appear slightly larger or smaller than the other. It is noted that (in general) the halves referred to are not (necessarily) the same as the connected parts mentioned. Alternatively, not shown, the shell 1 may comprise more connected parts than only connected parts 2, 3. Preferably, the shell 1 has a first half 9 and a second half 10, being respectively a lower half (first half 9) and an upper half (second half 10) with respect to the horizontal axis B or centerline passing through the center C. The lower half 9 being indicated below the horizontal axis B, whereas the upper half 10 being indicated above the horizontal axis B. According to an embodiment, the shape of the duckling is mainly contained in the second or upper half 10 of the shell 1, whereas the first or lower half 9 mainly represents a dome to be directly in contact with the (melting and/or dissolving) liquid onto which it is placed to float on.

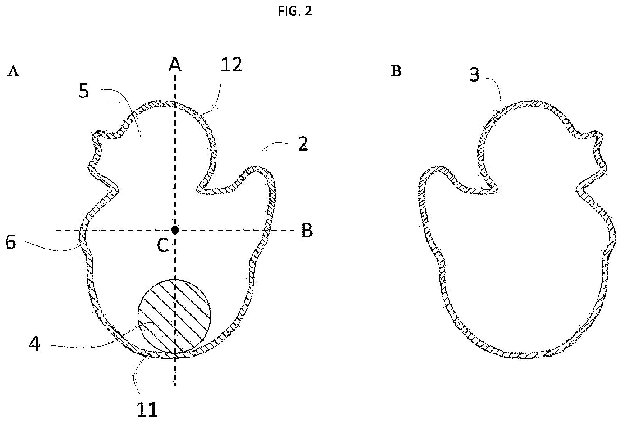

Figure 2 (a) shows a floatable food product according to the invention in cross-section, in particular providing only details for the cross-section of one part 2 of the connected parts 2, 3, and herewith very clearly shows that the filling 4 is facing one side 11 of the shell 1 with respect to the center C of the shell 1. On the opposite side 12 of the side 11 where the filling 4 is located, the shell 1 comprises air or an air chamber 5. Preferably, the side 11, where the filling 4 is located, is the lower half of the shell 1 with respect to a horizontal axis B or centerline. And preferably, the side 12 where the air chamber 5 is located is the upper half of the shell 1 relative to the horizontal axis B or centerline. According to an embodiment, the lower half of the shell 1 has at least essentially the shape of a dome or hemisphere. Further, according to an embodiment, the diameter of the lower half of the shell 1 is not larger than 40 mm. In addition, according to an embodiment, the height of the upper half of the shell 1 with respect to the horizontal axis B or centerline, and possibly with respect to the center point C, is at least substantially bigger/greater than or equal to the height of the lower half of the shell 1 with respect to the horizontal axis B or centerline. The filling 4 is for example spherical. Alternatively, not shown, the filling 4 may be in the form of a droplet, bullet or pellet. According to an embodiment, the shell 1, which makes contact with the warm liquid whenever the food product is placed on the liquid and floating thereon, will melt within 20-40 seconds. Referring to e.g. a chocolate food product with a hollow shell and/or chocolate-based filling, the type of chocolate and the ingredients in general may have an effect on the heat resistance and melting properties of the final product. Under normal circumstances, the melting point of the chocolate is around 36°C. The lower the melting point of the chosen chocolate, the faster the chocolate will melt and/or dissolve in the warm liquid. Stirring the drink with a (low) spoon speeds up the melting and/or dissolving process. The filling 4 may be a concentrated chocolate. Preferably, the filling 4 is a ganache. According to an embodiment, the thickness of chocolate walls 6 of the shell 1 is at least substantially uniform.

Figure 2 (b) also shows the cross-section of the other part 3 of the parts 2, 3 of the food product shown in Figure 2(a). Here, again, the food product comprises a hollow shell 1 based on chocolate. Figure 2 (b) specifically indicates part 3 (which represents the mirror image of part 2, the filling is not shown) of the shell 1. Figure 2 (a) and (b) together show the two connected parts 2, 3 respectively, which are preferably symmetrical, in particular mirroring and hence being each other's mirror image.

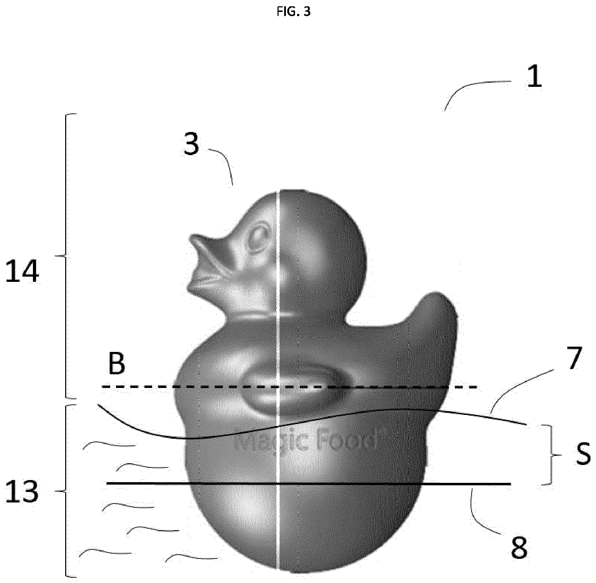

Figure 3 shows a side view of a food product according to the invention. The floatable food product again comprises a hollow shell 1 based on chocolate. The shell 1 comprises two connected parts 2, 3 and a filling 4 (not shown, provided inside the hollow shell). According to an embodiment, the filling 4 is located in the lower half of the shell 1 relative to a horizontal axis B or centerline, while in the upper half only air is present, or the air chamber 5 of the shell 1 is located relative to of the horizontal axis B or centerline. The wavy line 7 shows at least substantially the boundary between the air 14, which is above the line 7, and the preferably warm liquid 13, which is located below the line 7. This line 7 may represent the upper surface of the liquid onto which the food product is placed and floating, hereinafter also referred to as the air/liquid boundary line 7. It is rather exaggerated in waviness, whereas usually, in practice, the liquid upper surface will be flatter, unless e.g. the liquid is stirred with a spoon to speed up the melting and/or dissolving process. According to an embodiment, the filling 4 is located at least substantially, in particular fully below the horizontal line 8, hereinafter also referred to as the filling line 8. An area S between the air/liquid boundary line 7 and the filling line 8 is the area where the chocolate walls 6 are most sensitive to the (warm) liquid 13. The walls 6 (not explicitly shown) will melt and/or dissolve in the (warm) liquid 13 and the lower half of the shell 1, provided with the filling 4, will come off. Because the filling 4 forms a counterweight to the air chamber 5, the lower half of the shell 1 will come off more quickly due to the (close or in direct contact) (warm) liquid 13 and gravity and may subsequently sink into the (warm) liquid in order to melt and/or dissolve therein. If the lower half of the shell 1 with the filling 4 comes off, the filling 4 comes into direct contact with the (warm) liquid 13 and the filling 4 can also melt and/or dissolve.

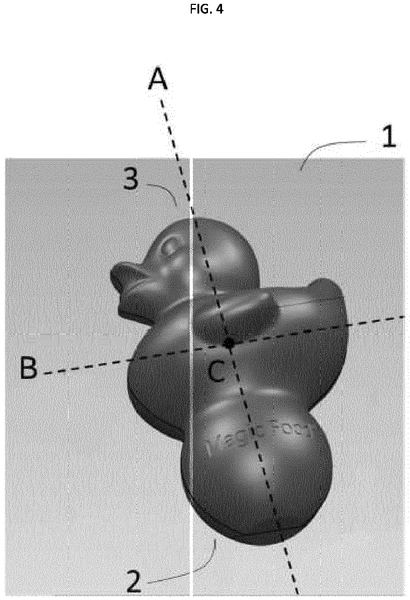

Figure 4 shows a perspective view of a floatable food product according to an embodiment of the invention. The embodiment here also concerns a chocolate duckling, but slightly different in shape than previous models as illustrated in Figures 1-3. The hollow shell 1, and the connected parts 2, 3 are also indicated in Figure 4, as well as the vertical and horizontal axes A, B and the center C. The difference is mainly visible in the lower half of the hollow shell 1 where the dome or hemisphere shape as referred to earlier (e.g. in the description of Figure 1) has now been replaced by an almost complete sphere, but with a smaller diameter than before. The filling (not shown) is provided inside the nearly complete sphere.

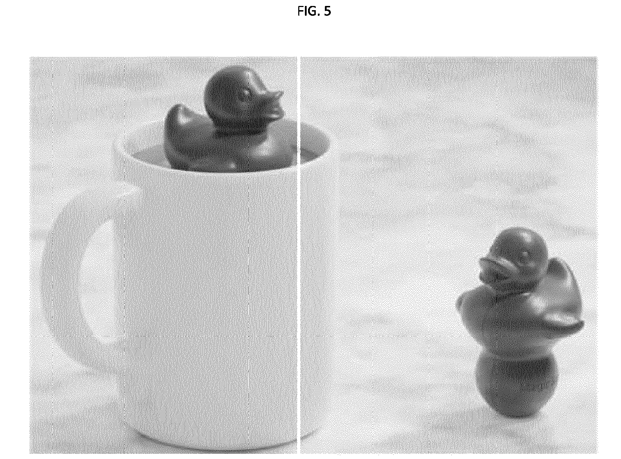

Figure 5 illustrates an application of a food product according to an embodiment of the invention. The chocolate duckling from Figure 4 is shown here again, on the one hand standing up in perspective view, as well as placed and floating on a liquid (for example, hot milk or chocolate milk) in a mug to clearly illustrate the use of the chocolate duckling in practice, and herewith its entertaining character, which may particularly attractive and pleasant for children in this case.

## Claims

1. A food product for preparing a drink by melting and/or dissolving it in a liquid (13), the food product comprises an edible hollow shell (1) comprising at least two connected parts (2, 3), and an edible filling (4),
wherein
- the food product is configured to float on said liquid before it starts melting and/or dissolving therein, in that;
- the edible hollow shell (1) can be divided along a surface into two non-identical halves, comprising a first half (9) and a second half (10), said surface passing through the center (C) of the edible hollow shell (1); and
- the edible filling (4), having a solid shape, is located in the first half (9) of the edible hollow shell (1), whereas the edible hollow shell (1) further comprises an air chamber (5)
wherein the first half (9), where the edible filling (4) is located, is a lower half of the edible hollow shell (1) with respect to a horizontal axis (B), and the lower half is in the shape of a dome or sphere.

2. The food product according to claim 1, wherein the edible hollow shell (1) is made on the basis of chocolate and/or the liquid is a warm liquid.

3. The food product of claim 1 or 2, wherein the first half (9) also comprises air (14).

4. The food product of claims 1 to 3, wherein the diameter of the dome or sphere shape of the lower half is not larger than 40 mm.

5. The food product according to claim 1 to 4, wherein the two connected parts (2, 3) are symmetrical.

6. The food product according to claims 1 to 5, wherein the second half (10) is an upper half of the edible hollow shell (1) with respect to the horizontal axis (B).

7. The food product according to claim 6, wherein the height of the upper half of the edible hollow shell (1) is bigger than or equal to the height of the lower half of the edible hollow shell (1).

8. The food product according to claims 1 to 7, wherein the edible filling (4) is spherical.

9. The food product according to claims 1 to 8, wherein the edible hollow shell (1), when in contact with a warm liquid, melts and/or dissolves within 20-40 seconds.

10. The food product according to claims 1 to 9, wherein the edible filling (4) is a concentrated chocolate.

11. The food product according to claims 1 to 10, wherein the edible filling (4) is a ganache.

12. The food product according to claims 1 to 11, wherein the thickness of the walls (6) of the edible hollow shell (1) is uniform.

13. A method of making a food product according to any one of claims 1 to 12 by means of a mold, the method comprising the steps:
- preforming at least two parts (2, 3) by pouring a nutrient in liquid state into the mold;
- preforming an edible filling (4);
- cooling the obtained parts (2,3) and the obtained edible filling (4);
- placing the edible filling (4) in one of the two parts (2, 3);
- connecting the two parts (2, 3) by welding them together using said or another nutrient in liquid state.

14. The method according to claim 13, wherein the nutrient is based on chocolate.

## Patentansprüche

1. Nahrungsmittelprodukt zum Zubereiten eines Getränks durch Schmelzen und/oder Auflösen desselben in einer Flüssigkeit (13), wobei das Nahrungsmittelprodukt eine essbare hohle Schale (1) umfasst, umfassend mindestens zwei verbundene Teile (2, 3) und eine essbare Füllung (4),
wobei
- das Nahrungsmittelprodukt konfiguriert ist, um auf der Flüssigkeit zu schwimmen, bevor es darin zu schmelzen und/oder sich darin aufzulösen beginnt, dadurch, dass;
- die essbare hohle Schale (1) entlang einer Oberfläche in zwei nichtidentische Hälften geteilt werden kann, umfassend eine erste Hälfte (9) und eine zweite Hälfte (10), wobei die Oberfläche durch das Zentrum (C) der essbaren hohlen Schale (1) verläuft; und
- die essbare Füllung (4), die eine feste Form aufweist, sich in der ersten Hälfte (9) der essbaren hohlen Schale (1) befindet, wobei die essbare hohle Schale (1) ferner eine Luftkammer (5) umfasst
wobei die erste Hälfte (9), in der sich die essbare Füllung (4) befindet, eine untere Hälfte der essbaren hohlen Schale (1) bezüglich einer horizontalen Achse (B) ist, und die untere Hälfte die Form einer Kuppel oder Kugel hat.

2. Nahrungsmittelprodukt nach Anspruch 1, wobei die essbare hohle Schale (1) auf der Basis von Schokolade hergestellt ist und/oder die Flüssigkeit eine warme Flüssigkeit ist.

3. Nahrungsmittelprodukt nach Anspruch 1 oder 2, wobei die erste Hälfte (9) auch Luft (14) umfasst.

4. Nahrungsmittelprodukt nach den Ansprüchen 1 bis 3, wobei der Durchmesser der Kuppel- oder Kugelform der unteren Hälfte nicht größer als 40 mm ist.

5. Nahrungsmittelprodukt nach Anspruch 1 bis 4, wobei die zwei verbundenen Teile (2, 3) symmetrisch sind.

6. Nahrungsmittelprodukt nach den Ansprüchen 1 bis 5, wobei die zweite Hälfte (10) eine obere Hälfte der essbaren hohlen Schale (1) bezüglich der horizontalen Achse (B) ist.

7. Nahrungsmittelprodukt nach Anspruch 6, wobei die Höhe der oberen Hälfte der essbaren hohlen Schale (1) größer als oder gleich der Höhe der unteren Hälfte der essbaren hohlen Schale (1) ist.

8. Nahrungsmittelprodukt nach den Ansprüchen 1 bis 7, wobei die essbare Füllung (4) kugelförmig ist.

9. Nahrungsmittelprodukt nach den Ansprüchen 1 bis 8, wobei die essbare hohle Schale (1), wenn sie mit einer warmen Flüssigkeit in Kontakt steht, innerhalb von 20-40 Sekunden schmilzt und/oder sich auflöst.

10. Nahrungsmittelprodukt nach den Ansprüchen 1 bis 9, wobei die essbare Füllung (4) eine konzentrierte Schokolade ist.

11. Nahrungsmittelprodukt nach den Ansprüchen 1 bis 10, wobei die essbare Füllung (4) eine Ganache ist.

12. Nahrungsmittelprodukt nach den Ansprüchen 1 bis 11, wobei die Dicke der Wände (6) der essbaren hohlen Schale (1) gleichmäßig ist.

13. Verfahren zum Herstellen eines Nahrungsmittelprodukts nach einem der Ansprüche 1 bis 12 mittels einer Form, das Verfahren umfassend die Schritte:
- Vorformen von mindestens zwei Teilen (2, 3) durch Gießen eines Nährstoffs in flüssigem Zustand in die Form;
- Vorformen einer essbaren Füllung (4);
- Kühlen der erhaltenen Teile (2,3) und der erhaltenen essbaren Füllung (4);
- Platzieren der essbaren Füllung (4) in einem der zwei Teile (2, 3);
- Verbinden der zwei Teile (2, 3) durch Schweißen derselben unter Verwendung des oder eines anderen Nährstoffs in flüssigem Zustand.

14. Verfahren nach Anspruch 13, wobei der Nährstoff auf Schokolade basiert.

## Revendications

1. Produit alimentaire permettant de préparer une boisson en le faisant fondre et/ou en le dissolvant dans un liquide (13), le produit alimentaire comprend une coque creuse comestible (1) comprenant au moins deux parties reliées (2, 3), et un fourrage comestible (4),
dans lequel
- le produit alimentaire est conçu pour flotter sur ledit liquide avant qu'il ne commence à fondre et/ou à se dissoudre dans celui-ci, en ce que ;
- la coque creuse comestible (1) peut être divisée le long d'une surface en deux moitiés non identiques, comprenant une première moitié (9) et une seconde moitié (10), ladite surface passant à travers le centre (C) de la coque creuse comestible (1) ; et
- le fourrage comestible (4), ayant une forme pleine, est localisé dans la première moitié (9) de la coque creuse comestible (1), alors que la coque creuse comestible (1) comprend en outre une chambre d'air (5)
dans lequel la première moitié (9), où le fourrage comestible (4) est localisé, est une moitié inférieure de la coque creuse comestible (1) par rapport à un axe horizontal (B), et la moitié inférieure est sous la forme d'un dôme ou d'une sphère.

2. Produit alimentaire selon la revendication 1, dans lequel la coque creuse comestible (1) est fabriquée à base de chocolat et/ou le liquide est un liquide chaud.

3. Produit alimentaire selon la revendication 1 ou 2, dans lequel la première moitié (9) comprend également de l'air (14).

4. Produit alimentaire selon les revendications 1 à 3, dans lequel le diamètre de la forme de dôme ou de sphère de la moitié inférieure n'est pas plus grand que 40 mm.

5. Produit alimentaire selon la revendication 1 à 4, dans lequel les deux parties reliées (2, 3) sont symétriques.

6. Produit alimentaire selon les revendications 1 à 5, dans lequel la seconde moitié (10) est une moitié supérieure de la coque creuse comestible (1) par rapport à l'axe horizontal (B).

7. Produit alimentaire selon la revendication 6, dans lequel la hauteur de la moitié supérieure de la coque creuse comestible (1) est supérieure ou égale à la hauteur de la moitié inférieure de la coque creuse comestible (1).

8. Produit alimentaire selon les revendications 1 à 7, dans lequel le fourrage comestible (4) est sphérique.

9. Produit alimentaire selon les revendications 1 à 8, dans lequel la coque creuse comestible (1), lorsqu'elle est en contact avec un liquide chaud, fond et/ou se dissout dans les 20 à 40 secondes.

10. Produit alimentaire selon les revendications 1 à 9, dans lequel le fourrage comestible (4) est un chocolat concentré.

11. Produit alimentaire selon les revendications 1 à 10, dans lequel le fourrage comestible (4) est une ganache.

12. Produit alimentaire selon les revendications 1 à 11, dans lequel l'épaisseur des parois (6) de la coque creuse comestible (1) est uniforme.

13. Procédé de fabrication d'un produit alimentaire selon l'une quelconque des revendications 1 à 12 au moyen d'un moule, le procédé comprenant les étapes :
- préformage d'au moins deux parties (2, 3) en déversant un nutriment à l'état liquide dans le moule ;
- préformage d'un fourrage comestible (4) ;
- refroidissement des parties (2, 3) obtenues et du fourrage comestible (4) obtenu ;
- mise en place du fourrage comestible (4) dans l'une des deux parties (2, 3) ;
- liaison des deux parties (2, 3) en les soudant ensemble à l'aide dudit ou d'un autre nutriment à l'état liquide.

14. Procédé selon la revendication 13, dans lequel le nutriment est à base de chocolat.
